(19) Europäisches Patentamt
European Patent Office
Office européen des brevets

(11) **EP 2 779 291 A1**

(12) **EUROPEAN PATENT APPLICATION**
published in accordance with Art. 153(4) EPC

(43) Date of publication:
**17.09.2014 Bulletin 2014/38**

(21) Application number: **12847087.9**

(22) Date of filing: **06.11.2012**

(51) Int Cl.:
*H01M 8/04* (2006.01)          *H01M 8/06* (2006.01)
*H01M 8/12* (2006.01)

(86) International application number:
**PCT/JP2012/078726**

(87) International publication number:
**WO 2013/069635 (16.05.2013 Gazette 2013/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2011   JP 2011245892**

(71) Applicant: **JX Nippon Oil & Energy Corporation
Chiyoda-ku
Tokyo 100-8162 (JP)**

(72) Inventors:
 • **IBUKA, Takeshi
   Tokyo 100-8162 (JP)**
 • **SATO, Yasushi
   Tokyo 100-8162 (JP)**

(74) Representative: **Grünecker, Kinkeldey,
Stockmair & Schwanhäusser
Leopoldstrasse 4
80802 München (DE)**

(54) **SOLID-OXIDE FUEL CELL SYSTEM, AND METHOD FOR STARTING SAME**

(57)     A suitable method for starting a SOFC system of the present invention leads to improve durability. By combusting the fuel gas supplied from the reformer to the combustion portion in S11 during system start-up, the temperatures of the reformer and the fuel cell stack are increased from room temperature. In S11, an ATR process begins, and the hydrogen-enriched fuel gas is generated by the autothermal reforming reaction. In S12, a cell temperature T is compared to a minimum reduction start temperature T1 of the cell support and, in the case of T ≥ (greater than or equal to) T1, the process proceeds to S13. In S13, by setting a mixed molar ratio ($O_2$/C) of oxygen in the ATR air supplied to the reformer and hydrocarbon in the raw fuel to 0.3 or more, the hydrogen concentration of the fuel gas is set to 50% or less. In S14, the cell temperature T is compared to a maximum reduction start temperature T2 of the cell support, and in the case of T > (greater than) T2, the process proceeds to step S15. In S15, the temperatures of the reformer and the fuel cell stack are continuously raised, while gradually increasing the hydrogen concentration of the fuel gas by decreasing $O_2$/C.

*FIG. 7*

EP 2 779 291 A1

## Description

TECHNICAL FIELD

The present invention relates to a solid-oxide fuel cell system, and a method for starting the same.

BACKGROUND ART

Attention has been focused on a solid oxide fuel cell system (hereinafter, referred to as an "SOFC system") as a next-generation stationary power source with low $CO_2$ emissions, from the viewpoint of high power generation efficiency of SOFC systems. In recent years, technologies have been actively developed, and thus, a problem in durability caused by an operation at a high temperature of 600 to 1,000°C has been overcome. In addition, the operation temperature has steadily been reduced.

As such a SOFC system, a system disclosed in Patent Document 1 is known.

The system is configured to include a reformer that generates a hydrogen-enriched fuel gas (reformed gas) by a reforming reaction; a fuel cell stack (assembly of fuel cells) which allows reacting the fuel gas from the reformer with air to generate power; and a module case which surrounds the reformer and the fuel cell stack, in the inside of the module case, and excessive fuel gas is combusted to maintain the reformer and the fuel cell stack in a high temperature state. Incidentally, these components are substantial parts of the system and are collectively referred to as a hot module.

In addition, each cell constituting the fuel cell stack is an anode supported solid oxide fuel cell, and includes a cell support which is made of a porous substance having a composition containing at least nickel (Ni) metal and is provided therein with a gas passage through which the fuel gas from a reformer passes from one end to the other end. The cell is configured by laminating (stacking) a fuel electrode layer, a solid oxide electrolyte layer, and an air electrode layer on the cell support. Moreover, the reformer and the fuel cell stack are heated by combusting excessive fuel gas at the other end of the gas passage.

Furthermore, Patent Document 2 discloses a method of operating the SOFC system including the hot module. In the method, when the temperature of the reformer is less than a partial oxidation reaction starting temperature, a reformer is heated by combustion heat due to a combustion gas; when the temperature of the reformer is equal to or greater than the partial oxidation reaction starting temperature and less than a steam reformable temperature range, the reformer is heated by the reaction heat of the partial oxidation reaction and combustion heat due to the combustion gas to thereby perform the partial oxidation reforming; when the temperature of the reformer is equal to or greater than the steam reforming reaction temperature and less than a normal temperature, the reformer is heated by controlling the reaction heat of the partial oxidation reaction, the combustion heat due to the combustion gas, and heat adsorption of the steam reforming reaction to perform the steam reforming by using the partial oxidation reaction and the steam reforming in combination; and when the temperature of the reformer is in the normal state, the reformer is heated by the combustion heat due to the combustion gas, to perform the steam reforming.

CITATION LIST

PATENT DOCUMENT

   Patent Document 1: Japanese Patent No. 4565980
   Patent Document 2: Japanese Laid-open (Kokai) Patent Application Publication No. 2004-319420

SUMMARY OF THE INVENTION

PROBLEMS TO BE SOLVED BY THE INVENTION

In stationary fuel-cell systems including a SOFC system, the system needs to be stopped at some frequency for various reasons, such as a user's choice, a purpose of exhibiting energy saving effect at a maximum, and a problem in a device or a utility.

Therefore, in order to put the SOFC system to practical use as a stationary power generation device, the SOFC system needs to have durability for about 10 years (start-up and stop operations of about 240 times) with the assumption that start-and-stop operation will be repeated.

The present invention has focused on the behavior at the time of start-up and stop of the SOFC system and the trend of the power generation performance degradation caused by the repetition of start-up and stop operation, and an object of the present invention is to improve the durability of the SOFC system based thereon.

MEANS FOR SOLVING THE PROBLEMS

The present inventors have found that in the fuel cell stack of the SOFC system, when the supply of fuel gas to the fuel cell stack is stopped after the power generation stop, air is diffused and introduced into the fuel electrode of the fuel cell from the outside, the cell support having a composition containing the nickel metal is oxidized by air under a high temperature state, the cell support is reduced under the supply of fuel gas at the time of restart, and thus, the fuel cells or the fuel cell stack is more likely to be damaged by the repetition of oxidation and reduction, which leads to drop of durability.

Furthermore, the present inventors have found that during system start-up, when the temperature of the cell support is within a reduction start temperature range, as the hydrogen concentration of the fuel gas from the reformer (in other words, the hydrogen partial pressure in the fuel gas) becomes higher, the fuel cell or the fuel cell stack is more likely damaged, which leads to the drop of durability. Here, the reduction start temperature range of the cell support corresponds to a temperature range at which the cell support oxidized at the time of the previous system operation stop (that is, at the time of the system shutdown before restart) begins to be reduced by the fuel gas from the reformer at the time of the current system start-up (that is, at the time of restart).

Furthermore, the durability of the cell is preferably monitored based on the power generation voltage of the cell at the time of current sweep under the system constant operating conditions. If any problems occur in the fuel cell stack including the cell support and the peripheral components, in any case, the problems are often observed as the voltage drop of the fuel cell stack, such as gas leakage due to cell support damage, resistance increase associated with detachment of the cell laminated structure, degradation of a contact state with a current collector metal due to the cell deformation. Therefore, it is possible to estimate durability (remaining service life) of the fuel cell stack by a change (drop) in the cell voltage relative to the initial state. In order to suppress such a drop of the cell voltage and maintain the cell voltage at a sufficient level even after 240 times as start-up and stop times in practice, it is desirable to reduce the hydrogen concentration of the fuel gas from the reformer within the reduction start temperature range at the time of the system start-up.

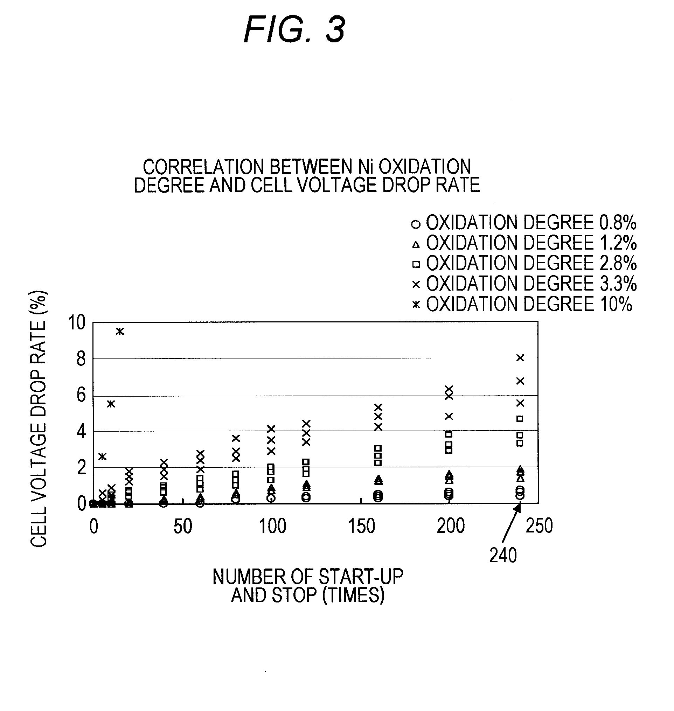

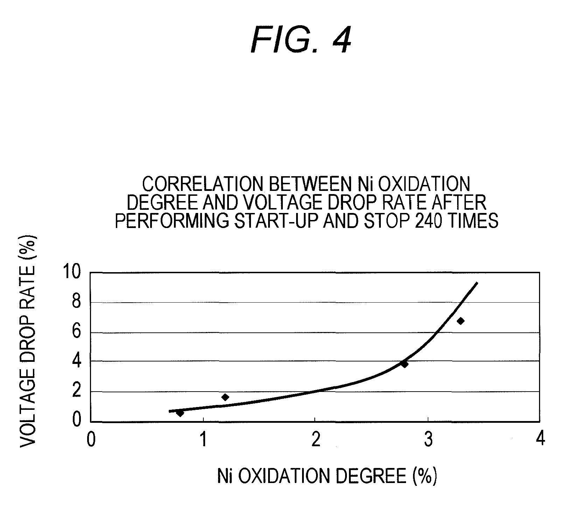

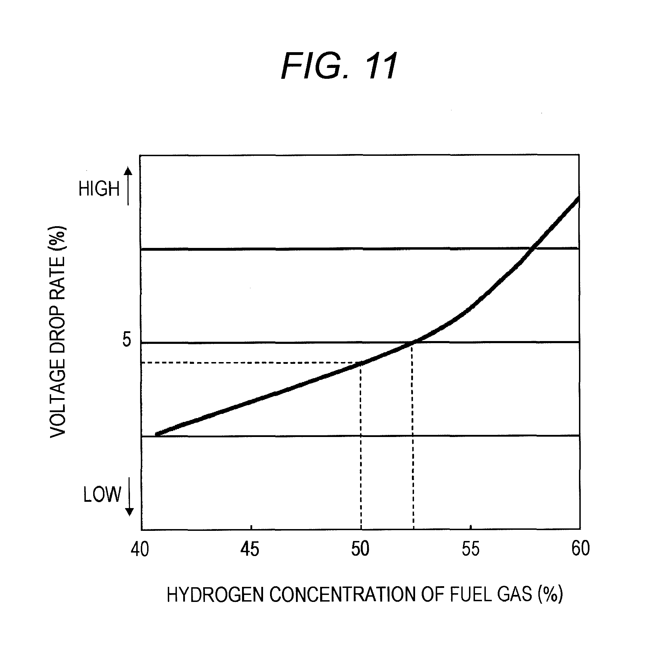

Fig. 11 illustrates a relationship between the hydrogen concentration of the fuel gas from the reformer and a voltage drop rate after performing the start-up and stop operation 240 times (a rate of change of the cell voltage with respect to the initial stage) in the reduction start temperature range of the cell support. Furthermore, the voltage drop rate used herein means a cycle-dependent voltage drop rate caused by start-up and stop of the system (the details thereof will be described below with reference to Figs. 3 and 4), and the allowed voltage drop rate is 5% or less.

As illustrated in Fig. 11, within the reduction start temperature range of the cell support, as the hydrogen concentration of the fuel gas becomes higher, the voltage drop rate increases.

In particular, as illustrated in Fig. 11, when the hydrogen concentration of the fuel gas is higher than 50%, the voltage drop rate is about 5% or more. In other words, when the hydrogen concentration of the fuel gas is higher than 50%, there is high possibility that the voltage drop rate exceeds the allowable range. This means that the power generation performance drops to an extent unacceptable before the start-up and stop operations reach 240 times, and therefore, there is a possibility that the durability required as a stationary power generation device may not be secured.

Thus, in the present invention, when the temperature of the cell support is within the reduction start temperature range during the system start-up, the hydrogen concentration of the fuel gas from the reformer is set to 50% or less.

Furthermore, in practice, in a case in which the temperature of the cell support is within the reduction start temperature range during the system start-up, if the hydrogen concentration of the fuel gas is less than an appropriate range thereof (in other words, the hydrogen concentration of the fuel gas is excessively low), there is a possibility of an occurrence of coking in the cell support due to an increase in the methane concentration in the fuel gas, or if partial oxidation reaction air is excessively introduced, there is a possibility of oxidation of the cell support due to an occurrence of $O_2$ slip in the reformer.

In order to suppress these problems, in the present invention, when the temperature of the cell support is within the reduction start temperature range during the system start-up, it is preferred to set the hydrogen concentration of the fuel gas from the reformer within the range of 15% to 50%.

EFFECT OF THE INVENTION

According to the present invention, by setting the hydrogen concentration of the fuel gas from the reformer at 50% or less within the reduction start temperature range of the cell support, as illustrated in Fig. 11, the voltage drop rate become less than 5%. This means that the power generation performance can be sufficiently secured even when the start-up and stop operations reach 240 times. Thus, in the reduction start temperature range of the cell support, by setting the hydrogen concentration of the fuel gas from the reformer at 50% or less, it is possible to secure the drop rate of the generated voltage within an allowable range (5% or less) even when the start-up and stop operations reach 240 times, and thus, it is possible to ensure good power generation performance for actual useful service period, and thus, it is possible to improve the durability of the fuel cell or the fuel cell stack.

Accordingly, in the general SOFC system in which oxidation during stop and reduction during start-up can occur, it is possible to improve the durability of the SOFC system by using the present invention.

BRIEF DESCRIPTION OF THE DRAWINGS

Fig. 1 is a longitudinal cross-sectional view schematically illustrating a hot module of a SOFC system according to a first embodiment of the invention.
Fig. 2 is a transverse cross-sectional view of a fuel cell stack of the system in planar view.
Fig. 3 is a view illustrating a correlation between a Ni oxidation degree and a cell voltage drop rate.
Fig. 4 is a view illustrating a correlation between a Ni oxidation degree and a voltage drop rate after performing a start-and-stop operation 240 times.
Fig. 5 is a view illustrating a relationship between a maximum stack temperature at the time of stopping a reformed gas and a Ni oxidation degree.
Fig. 6 is a flowchart of a power generation stop control.
Fig. 7 is a flowchart of a stack temperature increase control during start-up.
Fig. 8 is a view illustrating a relationship between a cell temperature and a reforming catalyst temperature.
Fig. 9 is a view illustrating a relationship among $O_2/C$, the reforming catalyst temperature, and the hydrogen concentration of the fuel gas.
Fig. 10 is a flowchart of a stack temperature increase control during start-up in a second embodiment of the present invention.
Fig. 11 is a view illustrating a relationship between the hydrogen concentration of the fuel gas in the reduction start temperature range during start-up and the voltage drop rate.

MODE FOR CARRYING OUT THE INVENTION

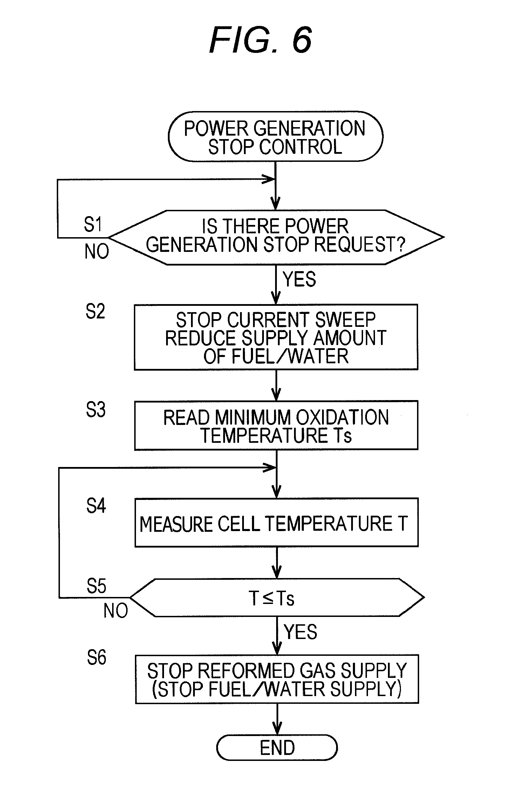

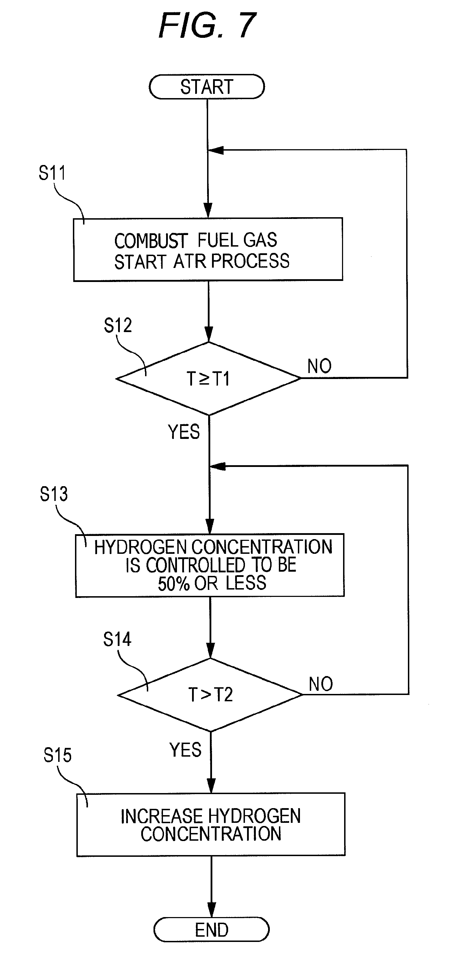

Hereinbelow, embodiments of the invention will be described in detail.

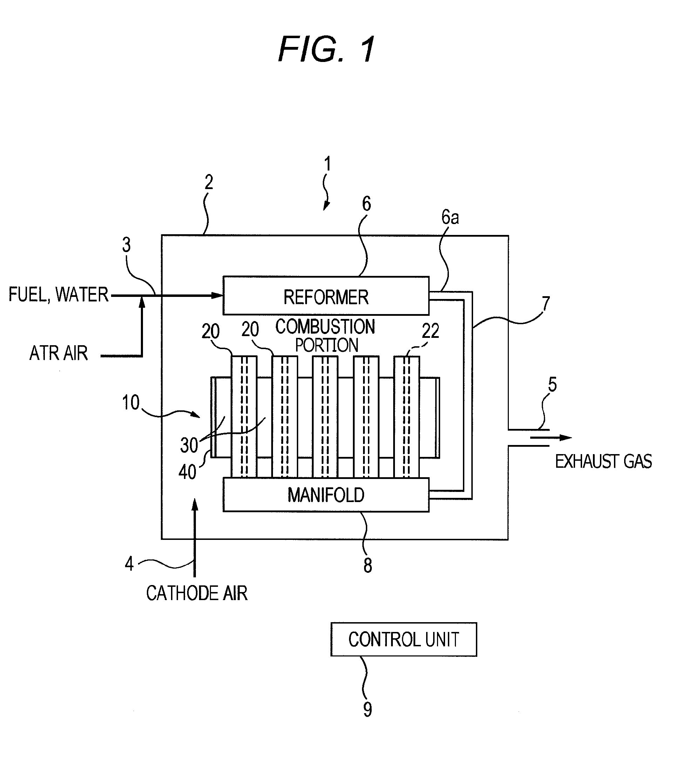

Fig. 1 is a longitudinal cross-sectional view schematically illustrating a hot module that is a substantial part of a SOFC system according to a first embodiment of the invention.
A hot module 1 is configured to accommodate a reformer 6 and a fuel cell stack 10 in a module case 2.
The module case 2 is configured such that the inner surface of a rectangular-parallelepiped outer frame made of a heat-resistant metal is sealed with a heat insulation material. In addition, a supply tube 3 of fuel, water, and air for autothermal reforming reaction (ATR) and a supply tube 4 of air for cathode are provided from the outside into the case. Moreover, an exhaust port 5 is further included. As fuel (raw fuel), hydrocarbon fuel such as city gas, LPG, methanol, DME, and kerosene is used. Furthermore, in the supply tube 3 of fuel, water and ATR air, a flow rate control valve (not illustrated) is provided so as to be capable of individually adjusting the flow rate of fuel, water, and ATR air. An opening degree of each flow rate control valve is controlled based on a control signal from the control unit 9 of the SOFC system to thereby the flow rate control is performed.
The control unit 9 performs the operation for various controls of the system, and in particular, performs a power generation stop control and a stack temperature increase control during start-up. Details of these controls will be described later with reference to Figs. 6 and 7.
In Fig. 1, the reformer 6 is disposed at the upper portion in the module case 2 (upper side of the fuel cell stack 10) and the supply tube 3 of fuel, water, and air for ATR from the outside is connected thereto.
The case of the reformer 6 is formed by a heat-resistant metal. A catalyst chamber that accommodates a reforming catalyst used for reforming a raw fuel such as city gas, LPG, methanol, DME, and kerosene to be a hydrogen-enriched fuel gas (reformed gas), and a water vaporizing chamber that vaporizes water for a steam reforming reaction and the autothermal reforming reaction using a reforming catalyst are formed in the case.
One end of a reformed gas supply tube 7 is connected to a reformed gas outlet 6a of the reformer 6, and the other end of the reformed gas supply tube 7 is connected to a hollow manifold 8 for distributing a reformed gas that is disposed at the lower side of the fuel cell stack 10.
The fuel cell stack 10 is disposed at the lower portion in the module case 2 (lower side of the reformer 6) and is held on the manifold 8.
The fuel cell stack 10 is an assembly of plural fuel cells 20. The plural longitudinal cells 20 (for simplicity, five cells are illustrated in Fig. 1) are arranged in a row in the transverse direction such that collector members 30 are interposed between the side surfaces of the cells 20. In the same manner, the plural cells 20 are arranged in a matrix form by arranging the plural cells in plural rows behind the row of Fig. 1.

A gas passage 22 is formed at the inside of each fuel cell 20 from the lower end to the upper end. The lower end of each gas passage 22 is communicated with the manifold 8, and a combustion portion used for an excessive fuel gas is formed at the upper end thereof.

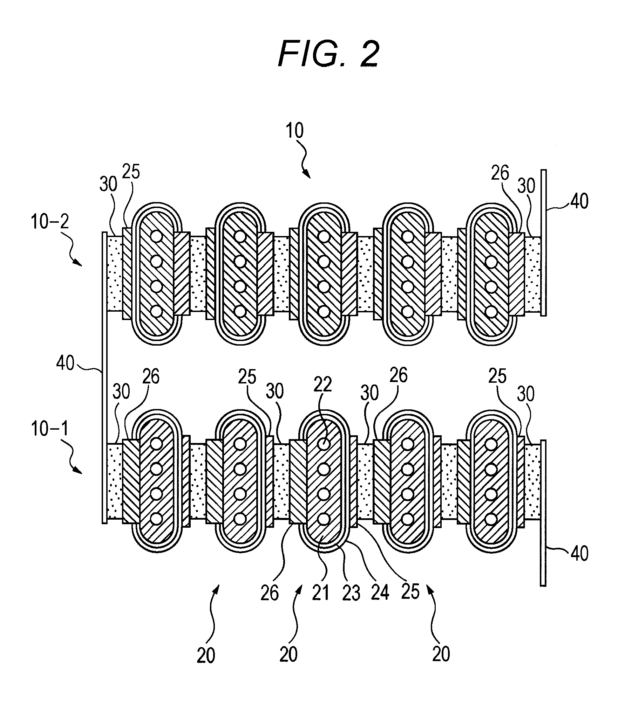

Next, each fuel cell 20 constituting the fuel cell stack 10 will be described with reference to Fig. 2.

Fig. 2 is a transverse cross-sectional view of the fuel cell stack in plane view.

The fuel cells 20 are an anode supported solid oxide fuel cell and includes a cell support 21 (provided with the gas passage 22), a fuel electrode layer 23, a solid oxide electrolyte layer 24, an air electrode layer 25, and an interconnector 26.

The cell support 21 is made of a porous substance having a composition including at least nickel metal. The cell support 21 is a plate-shaped piece having a flat oval transverse cross section and extending in the longitudinal direction

(vertical direction), and has planar both side surfaces (planar surfaces) and semi-cylindrical front and rear surfaces. One end (lower end) of the cell support 21 is inserted to an opening of the upper surface of the manifold 8 to be fitted gas-tight thereto. The other end (upper end) of the cell support 21 is opposite to the lower surface of the reformer 6. The plural gas passages 22 which are arranged in parallel to each other and through which a reformed gas from the manifold 8 flows are provided in the inside of the cell support 21 from one end (lower end) to the other end (upper end) in the longitudinal direction.

The interconnector 26 is provided on one planar surface (at the left side of a fuel cell stack 10-1 of the first row in Fig. 2) of the cell support 21.

The fuel electrode layer 23 is laminated on the other planar surface (at the right side of the fuel cell stack 10-1 of the first row in Fig. 2) of the cell support 21 and on the front and rear surfaces and the both ends thereof are joined to both ends of the interconnector 26.

The solid oxide electrolyte layer 24 is laminated on the fuel electrode layer 23 so as to cover the entire fuel electrode layer 23, and each end of the solid oxide electrolyte layer are joined to each end of the interconnector 26.

The air electrode layer 25 is laminated on the main portion of the solid oxide electrolyte layer 24, that is, on a portion covering the other planar surface of the cell support 21 such that the air electrode layer 25 faces the interconnector 26 to interpose the cell support 21 therebetween. Therefore, the interconnector 26 is disposed on one outside surface (at the left side of the fuel cell stack 10-1 of the first row in Fig. 2) of each cell 20 and the air electrode layer 25 is disposed on the other outside surface (at the right side) of each cell 20.

In other words, each cell 20 includes the cell support 21 having the gas passages 22 and is configured such that the fuel electrode layer 23, the solid oxide electrolyte layer 24, and the air electrode layer 25 are laminated (stacked) in this order on one surface of the cell support 21 and the interconnector 26 is further formed on the other surface of the cell support 21.

The plural fuel cells 20 are arranged in the transverse direction and are joined in a row via the collector members 30. That is, as indicated in the fuel cell stack 10-1 of the first row in Fig. 2, the plural cells 20 in a row are connected with each other in series in such a manner that the interconnector 26 disposed at the left side of each cell 20 is joined to the air electrode layer 25 of the left adjacent cell 20 via the collector member 30 and the air electrode layer 25 disposed at the right side of each cell 20 is joined to the interconnector 26 of the right adjacent cell 20 via the collector member 30.

In addition, at the rear side of the fuel cell stack 10-1 of the first row in Fig. 2, a fuel cell stack 10-2 at the second row is provided, but in the fuel cell stack 10-2 of the second row, the cells 20 are arranged in a right-left reverse direction with respect to the fuel cell stack 10-1 of the first row.

The fuel cell stack 10-1 of the first row and the fuel cell stack 10-2 of the second row are connected with each other in series in such a manner that the collector member 30 attached to the interconnector 26 of the leftmost cell 20 of the fuel cell stack 10-1 of the first row and the collector member 30 attached to the air electrode layer 25 of the leftmost cell 20 of the fuel cell stack 10-2 of the second row are connected with each other by a conductive member 40.

In the hot module 1, a fuel for producing hydrogen such as city gas, LPG, methanol, DME, and kerosene, and water for reforming are supplied to the reformer 6 from the supply tube 3 of fuel, water, and air for ATR. In the reformer 6, steam reforming (SR), partial oxidation reforming (POX), or autothermal reforming (ATR) in which the partial oxidation reaction is accompanied by the steam reforming reaction, is performed to generate hydrogen-enriched fuel gas (reformed gas). The generated reformed gas is supplied to the manifold 8 for distribution through the reformed gas supply tube 7.

The reformed gas supplied to the manifold 8 is distributed to the fuel cells 20 constituting the fuel cell stack 10, and is supplied to the gas passage 22 formed in a support 21 of each cell 20, and then ascends the gas passage 22. In this process, hydrogen in the reformed gas is permeated to the inside of the cell support 21 so as to reach the fuel electrode layer 23.

On the other hand, air (oxygen-containing gas) is introduced to the inside of the module case 2 from the supply tube 4 of air for a cathode and supplied to the fuel cells 20 constituting the fuel cell stack 10. Then, oxygen in air reaches the air electrode layer 25 of each cell 20.

According to this, in each fuel cell 20, the electrode reaction of the following Formula (1) occurs in the air electrode layer 25 at the outside, and the electrode reaction of the following Formula (2) occurs in the fuel electrode layer 23 at the inside, thereby generating power.

$$\text{Air electrode: } 1/2O_2 + 2e^- \rightarrow O^{2-} \text{ (solid electrolyte)} \qquad (1)$$

$$\text{Fuel electrode: } O^{2-} \text{ (solid electrolyte)} + H_2 \rightarrow H_2O + 2e^- \qquad (2)$$

Among the reformed gas flowing through the gas passage 22 of the support 21 in the cell 20, the reformed gas which has not been used in the electrode reaction is allowed to flow out from the upper end of the support 21 to the inside of the module case 2. The reformed gas allowed to flow out to the inside of the module case 2 is allowed to be combusted at the same time of flowing out. An appropriate ignition means (not illustrated) is provided in the module case 2. Upon the reformed gas is started to flow out to the inside of the module case 2, the ignition means is allowed to be operated so as to start combustion. In addition, among the air introduced to the inside of the module case 2, the air which has not been used in the electrode reaction is used in combustion. The temperature in the module case 2 is increased to be a high temperature of, for example, about 600 to 1,000°C due to the power generation in the fuel cell stack 10 and the combustion of excessive reformed gas. The combustion gas generated by the combustion in the module case 2 is exhausted from the exhaust port 5 to the outside of the module case 2.

The fuel cells 20 will be described in more detail.

The cell support 21 is demanded to have gas permeability (to be porous) for transmitting the fuel gas to the fuel electrode layer 23 and to have a conductive property for collecting power through the interconnector 26. The cell support 21 can be made of cermet satisfying such a demand. Specifically, the cell support 21 is made of a nickel cermet obtained by appropriately performing reduction treatment or the like on a complex oxide composition containing at least nickel oxide. The complex oxide composition may contain one or two or more kinds of metal oxide selected from at least scandium, yttrium, lanthanum, cerium, titanium, and zirconium, as components other than nickel oxide. Incidentally, by the reduction treatment, it is considered that components other than nickel oxide are not concerned with redox reaction substantially. In addition, in the complex oxide composition before the reduction treatment of the cell support 21, a ratio of the nickel oxide is set to be 50% by weight or more (50 to 90% by weight, and preferably 60 to 80% by weight).

A cell constituting layer which is formed on the cell support 21 will be further described.

The fuel electrode layer 23 is made of porous conductive ceramics.

The solid oxide electrolyte layer 24 needs to have a function as an electrolyte used to bridge electron conduction and ion conduction between electrodes and to have a gas barrier property in order to prevent leakage of a fuel gas and air. Generally, the solid oxide electrolyte layer 24 is made of a solid electrolyte containing oxide such as $ZrO_2$ and $CeO_2$.

The air electrode layer 25 is made of conductive ceramics and has gas permeability.

The interconnector 26 may be made of conductive ceramics. However, since the interconnector 26 contacts a fuel gas and air, the interconnector 26 has a reduction resistance and an oxidation resistance. Furthermore, the interconnector 26 is a dense substance in order to prevent leakage of a fuel gas flowing through the gas passage 22 formed in the cell support 21 and air flowing to the outside of the cell support 21.

The collector member 30 is configured to include a member that has an appropriate shape and is made of an elastic metal or an elastic alloy. The conductive member 40 can be made of an appropriate metal or alloy.

Incidentally, in the SOFC system as described above, the system needs to be stopped at some frequency for various reasons such as a user's choice, a purpose of exhibiting energy saving effect at a maximum, or a problem in a device or a utility. Due to this stop process (shutdown process) and the following restart process, various problems in durability occur.

In particular, after stopping the supply of the reformed gas to the fuel cell stack 10 in the stop process and before the fuel cell stack 10 has not completely cooled, air flows into the cell support 21 and the fuel electrode layer 23, so that a serious problem occurs due to the oxidation of the cell support 21 or occurs when the cell support 21 is reduced from the oxidation state by restarting.

Generally, if the oxidation and reduction of the cell support containing nickel is repeated, transformation such as expansion, contraction, or bending occurs in a cell, and thus, the cell itself is damaged, or a crack or gap is generated between the cell and a member adjacent to the cell. Therefore, there is a possibility that various problems are caused, such as a drop in a cell voltage or a temperature distribution change of the reformer according to a change in the combustion state in the upper portion of the cell.

It is considered that such problems occur due to the following mechanism as described below.

In the stop process of the SOFC system, the supply of the fuel gas (reformed gas) is generally continued even after the power generation is stopped. The fuel gas which has not been used in the power generation is reacted with air supplied from the circumference in the combustion space above the fuel cell stack 10 so as to be combusted, but the fuel cell stack 10 is gradually cooled down during this combustion. When the fuel cell stack 10 is cooled down to a set temperature, the supply of the raw fuel to the reformer 6 is stopped and the supply of the reformed gas to the fuel cell stack 10 is also stopped at the same time. Since the temperature of the reformer 6 is decreased in accordance with the temperature decrease of the fuel cell stack 10, there is a lower limit of the temperature at which the reformed gas is continuously supplied in response to the request of the reformer 6 such as a catalyst activity used in the reforming reaction or vaporization and dispersion of water used in reforming. Accordingly, the supply of the reformed gas needs to be stopped at any time point from a state of stopping power generation to a complete stop state in which the fuel cell stack 10 or the reformer 6 is cooled down to room temperature.

When the supply of the reformed gas is stopped, air supplied from the supply tube 4 of air for cathode passes through the gas passage 22 of the cell support 21 and then back diffusion of the air occurs. In view of the start of inflow of air and a temperature of the support of each unit of the fuel cell stack 10 at this time point, if inflow of air is started at or above a temperature at which nickel metal in the support 21 is subjected to oxidation, nickel is oxidized. Since the support 21 is a complex (cermet) of metal nickel and oxide ceramics, nickel metal in the support 21 is partially turned into nickel oxide. The cell is gradually cooled down through such a process, and eventually, the oxidation degree converges to a certain degree such that the system is completely stopped.

Next, when the system is restarted from a state in which nickel in the support 21 is partially oxidized, a raw fuel and water, and if needed, air for ATR, are introduced to the reformer 6, and then a hydrogen-containing reformed gas is supplied to the fuel cell stack 10 by the steam reforming reaction (SR) or the autothermal reforming reaction (ATR) or the like. According to this, most of the partially-oxidized nickel in the support 21 is returned to a state of metal nickel which is completely reduced again. The present inventors found that there is a strong correlation between a case in which oxidation and reduction of nickel metal in the cell support 21 is repeated in this manner and a process from cell voltage drop to cell damage.

In other words, the present inventors found that the cell damage risk of the fuel cell stack as described above can be determined by a transition of cell voltages. They have further continued the research and then found that, when the oxidation degree at the time of stop is increased, the voltage drop is increased, and when the temperature of the cell support is within the reduction start temperature range at the time of start-up, the voltage drop is suppressed by suppressing the hydrogen concentration of the fuel gas from the reformer.

Herein, regarding the nickel in the cell support 21, most of nickel in the cell support 21 is reduced to metal nickel by performing the abovementioned reduction treatment. However, this state is disrupted at the time when the reducing gas is stopped to flow in accordance with the stop of the fuel cell system, and a certain ratio of nickel atoms are oxidized by oxygen in air reversely diffused to the gas passage 22 in the cell support 21 such that the nickel is present as nickel oxide.

Therefore, in the present embodiment, a degree to which nickel metal in the cell support 21 is oxidized after stopping the power generation is considered as an index for durability evaluation. This oxidation degree is defined as a Ni oxidation degree by the following formula.

Ni oxidation degree = (Number of moles of Ni atoms that are present as NiO among Ni atoms contained in the cell support) / (Number of moles of all Ni atoms in the cell support) $\times$ 100 (%)

Herein, the Ni oxidation degree may be obtained by measuring the cell support with an instrumental analytical technique such as XRD or XPS. However, in a more direct manner, if the ratio of nickel contained in the cell support is already known, the Ni oxidation degree can be calculated from an increase and decrease in weight before and after performing a certain oxidation or reduction treatment.

As one example, it has been known that when the nickel metal in the cell support is subjected to air calcining for a sufficient time of 12h or more under a high temperature of approximately 900°C, the substantially all atoms are oxidized to therby obtain nickel oxide NiO. If the cell support having the weight ratio of nickel oxide of 70% contained in the cell support before the reduction treatment is used, in a case in which the cell support components other than nickel are not affected by redox, when performing the oxidation at 900°C from the reduction state in which all nickel atoms are in the metallic state, and as a whole, there is a weight increase of $1/(1 - 16/(58.7 + 16) \times 0.7) = 1.176$ times, that is, a weight increase of 17.6%. Here, the atomic weight of nickel Ni was 58.7 and the atomic weight of oxygen O was 16.

However, since a part of the nickel atoms is oxidized already after the stop, when performing the oxidation at 900°C from the partially oxidized state after the stop, the weight increase is smaller than the abovementioned calculated value. That is, if 25% of the total nickel atoms is NiO after the stop, since the weight increase of $(1 + 0.176 \times 0.25) = 1.044$ times is already obtained by the conversion from the completely reduced state to the partially oxidized state, it remains in the weight increase of $1.176/1.044 = 1.126$ times, that is, the weight increase of 12.6%.

Thus, if the weight increase to the completely oxidized state is measured on the cell support after the stop (partially oxidized state), it is possible to know the weight increase from completely reduced state to the partially oxidized state, based on the measured weight increase and the weight increase from the completely reduced state to the completely oxidized state, and it is possible to know the oxidation degree of the partially oxidized state, based on the ratio between the weight increase from the completely reduced state to the completely oxidized state and the weight increase from the completely reduced state to the partially oxidized state.

In the abovementioned example, by measuring the weight increase (1.126 times) from the partially oxidized state to the completely oxidized state, the weight increase from the completely reduced state to the partially oxidized state is 1.176/1.126 = 1.044, and the Ni oxidation degree in the partially oxidized state is (1.044 - 1)/(1.176 -1) $\times$100 = 25(%).

Therefore, the Ni oxidation degree in a partial oxidation state can be obtained by the following formula based on a maximum weight change ratio (increase ratio) $R_{max}$ (to be obtained in advance) from the complete reduction state to the complete oxidation state, and a weight change ratio (increase ratio) R2 from the partial oxidation state after stopping the power generation to the complete oxidation state.

$$\text{Ni oxidation degree} = ((R_{max}/R2) - 1) / (R_{max} -1) \times 100 \,(\%)$$

Herein, $R_{max}/R2$ corresponds to a weight change ratio R1 from the complete reduction state to the partial oxidation state.

When the weight change is measured, the cell support itself may be used actually as a sample to perform the weight measurement, but it is more preferably to use a measuring instrument such as TG-DTA.

Furthermore, the method of measuring the Ni oxidation degree of the support based on the weight increase in the oxidation under the high temperature state has been illustrated in the abovementioned example, if there is a means capable of measuring a weight while a reducing gas such as hydrogen gas flow flows under heating, the Ni oxidation degree can be similarly calculated from a decrease in weight to the complete reduction. That is, the weight change ratio "R1 = $W_x/W_0$' from the complete reduction state to the partial oxidation state is obtained from a weight $W_x$ in the partial oxidation state and a weight $W_0$ in the complete reduction state, so that "Ni oxidation degree = (R1 - 1) / ($R_{max}$ - 1) $\times$ 100 (%)" can be obtained. In a case in which the Ni oxidation degree is low, the above method may be more preferably used.

Therefore, in any case, the Ni oxidation degree can be obtained based on the change in weight (maximum weight change ratio) which has been determined in advance between the complete reduction state and the complete oxidation state and the change in weight (change ratio) from the partial oxidation state after the power generation stops to the complete oxidation or reduction state.

Next, a correlation between durability of the cell and a Ni oxidation degree, more specifically, a threshold value of the Ni oxidation degree that is an index of durability evaluation will be discussed.

In general, the durability of the cell is preferably monitored by a power generation voltage of the cell at the time of current sweep under a constant operation condition of the system. If any problem occurs in the cell stack including the cell support or a peripheral member, even in a case of gas leakage due to cell support damage, an increase in resistance according to detaching of a cell laminated structure, degradation in the contact state with current collector metal according to cell deformation, or the like, the problem may be observed as a voltage drop of the cell stack in many cases. Therefore, durability (residual life) of the cell stack can be presumed by a change (drop) in the cell voltage with respect to the initial stage. In order to suppress such a cell voltage drop and maintain a cell voltage to be a sufficient level even after the start-and-stop operation is performed 240 times that is the practically usable number of times of the start-and-stop operation, it is necessary to suppress the Ni oxidation degree after the stop to be low.

Fig. 3 illustrates a result obtained by plotting a change in cell voltage drop rates (particularly, a cycle-dependent voltage drop rate due to the start-and-stop operation to be described below) of each system in a verification test in which plural systems are started and stopped under conditions of different Ni oxidation degrees after the stop. In addition, Fig. 4 is a view obtained by focusing data obtained when performing the start-and-stop operation 240 times among the results of Fig. 3 and in which the horizontal axis indicates a Ni oxidation degree and the vertical axis indicates an average of voltage drop rates.

The cell voltage drop rate is expressed by an initial voltage $V_{ini}$ and a voltage $V_{final}$ after service life (or after an accelerated durability test on the assumption of service life), that is, expressed as "(1 - $V_{final}/V_{ini}$) $\times$ 100 [%]", based on voltage summation V of the cell stack under a rated equivalent operation condition (generally, at the time of the current sweep of 0.2 to 0.3 A/cm$^2$).

From the results of Fig. 3 and Fig. 4, in the system having a high Ni oxidation degree after the stop, the cell voltage drop rate is large and a change thereof is rapid. In order to improve durability, it can be understood that it is effective to suppress the Ni oxidation degree after the stop to be low.

Incidentally, in general, the service life required for a household stationary fuel-cell system is at least 10 years and preferably 15 years. If cases of stop by a user's choice, stop corresponding to an operation of a gas meter provided in a fuel utility line, or stop at the time of emergency (when a slight error occurs) or maintenance are included, the number of times of the start-and-stop operation to be envisioned for 10 years is estimated to be 240 times. Therefore, the system is also required to be resistant to at least 240 times of the start-and-stop operation.

In view of the fuel-cell system as an energy saving device, an acceptable total voltage drop rate is at most 15% and preferably 10% or less.

The total voltage drop rate includes: (1) a temporal voltage drop due to the long-term use (cell thermal degradation or the like); (2) a cycle-dependent voltage drop due to the start-and-stop operation; and (3) a voltage drop due to usage environment such as incorporation of impurities. However, among these, the invention focuses on "(2) a cycle-dependent voltage drop due to the start-and-stop operation".

Therefore, in Fig. 3 and Fig. 4, the cycle-dependent voltage drop rate due to the start-and-stop operation is simply referred to as the "voltage drop rate" and this is considered as an index of durability maintenance.

Specifically, a voltage drop rate, which is substantially influenced only by the start-and-stop operation, can be distinguish by measuring a voltage drop rate dependent on the number of times of the start-and-stop operation by a start-and-stop cycle test or the like and subtracting, from the measured value, a voltage drop rate estimated by a continuous operation test, an impurity incorporation test, or the like which is separately carried out.

If effects due to multiple factors are taken into consideration, the (narrowly-defined) voltage drop rate due to the 240 times of the start-and-stop operation is at most 5% and preferably 3% or less.

Thus, it is desirable to suppress the Ni oxidation degree after the stop to a lower level so that the voltage drop rate due to the start-up and stop of 240 times is 5% or less, and preferably, 3% or less.

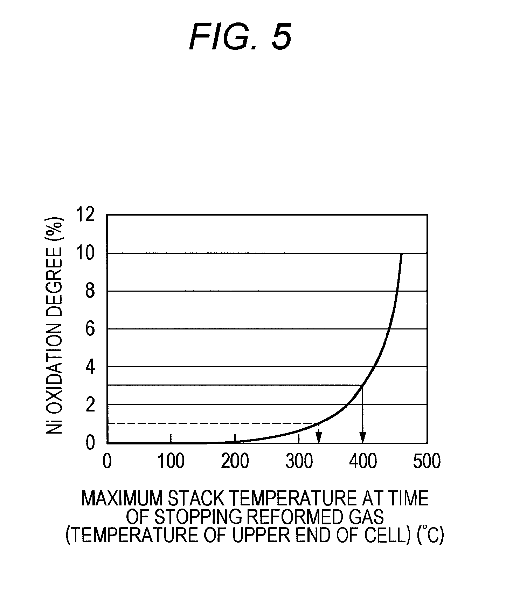

Fig. 5 illustrates a result obtained by measuring Ni oxidation degrees at each temperature of the upper end of the cell support 21 (maximum stack temperature at the time of stopping the reformed gas) that is the maximum temperature portion of the fuel cell stack 10 when the reformed gas is stopped at the stop process of the SOFC system (when the supply of the fuel to the reformer 6 is stopped and then the supply of the reformed gas to the fuel cell stack 10 is stopped).

From the view of Fig. 5, it is clear that the maximum stack temperature (cell upper end temperature) at the time of stopping the reformed gas needs to be set at about 400°C or lower (preferably, 330°C or lower) in order to suppress the Ni oxidation degree to be low. Therefore, this temperature can be determined as the "minimum oxidation temperature of nickel metal".

Therefore, regarding the stop control of the SOFC system, the fuel supply amount or the air supply amount to the fuel cell stack is appropriately controlled until the maximum stack temperature is below the minimum oxidation temperature of nickel metal, so that the Ni oxidation degree after the stop is suppressed to be within a predetermined threshold value.

The Ni oxidation degree is used as an index of durability evaluation to evaluate durability of the SOFC system. In addition, the system is designed such that this Ni oxidation degree becomes a predetermined value or less. Accordingly, at the time of the normal stop of the system, by performing the stop control to be described later, it is possible to keep the Ni oxidation degree after the stop within a predetermined value or less and to make the voltage drop rate due to 240 times of the start-and-stop operation be 5% or less, and preferably 3% or less.

Incidentally, regarding the design of the SOFC system, the Ni oxidation degree after the stop of actual equipment is measured and is provided on the design (setting of a power generation stop condition) with feedback such that the Ni oxidation degree is within a predetermined value.

Fig. 6 is a flowchart of the power generation stop control executed by the control unit 9.

In S1, it is determined whether there is a power generation stop request, and when there is a power generation stop request, the process proceeds to S2.

In S2, the current sweep is stopped by opening a power generation circuit and the supply amount of fuel and water to the reformer is reduced at the same time.

In S3, a minimum oxidation temperature Ts of nickel metal is read. This minimum oxidation temperature Ts is stored in an internal memory of the control unit 9 and is rewritable by a service person during maintenance or the like so as to suppress the Ni oxidation degree after the stop within a predetermined threshold value. The minimum oxidation temperature Ts is set at, for example, about 400°C.

In S4, the cell temperature T (cell upper end temperature or the like) is measured by a temperature sensor in the system (in this embodiment, a temperature sensor for measuring the temperature of the cell support).

In S5, the measured cell temperature T and the minimum oxidation temperature Ts are compared with each other and then it is determined whether or not to be T ≤ (is less than or equal to) Ts.

When T > (is greater than) Ts, the process returns to S4 and S5, and the measurement and determination of the cell temperature T is continued. When T ≤ (is less than or equal to) Ts, the process proceeds to S6.

In S6, the supply of fuel and water to the reformer is stopped and the supply of reformed fuel to the fuel cell stack is stopped at the same time. Moreover, although not illustrated in the flow, the cell temperature T is monitored after that, and when the cell temperature T reaches room temperature, the system is completely stopped.

Thus, by focusing on the Ni oxidation degree in the cell support of the fuel cell stack after the power generation stop to control the value so as to be within a predetermined threshold value, it is possible to suppress damages to the fuel cell stack due to the cycle of oxidation and reduction in accordance with the start-up and stop of the SOFC system.

Moreover, the present inventors have focused on the fact that the damage to the fuel cell stack can be effectively reduced by relatively slowly starting the reduction in the process of reduction of nickel oxide in the cell support at the time of system start-up, even when not performing the power generation stop control (S1 to S6) illustrated in Fig. 6 (for example, when performing a conventional general power generation stop control which is not focused on the Ni oxidation degree in the cell support after the power generation stop), on the basis of the abovementioned cell damage mechanisms, and have found that it is possible to suppress a decrease in durability due to the reduction of nickel oxide by controlling the hydrogen concentration of the fuel gas from the reformer at the time of the start-up (see the abovementioned Fig. 11). Accordingly, the present invention has been accomplished based on this finding.

Fig. 7 is a flowchart of the stack temperature increase control during start-up suggested by the present inventors based on this finding, and the temperature increase control is executed by the control unit 9.

At the time of start-up, in S11, the raw fuel, water, and ATR air as required are supplied to the reformer, and the fuel gas from the reformer is supplied to the combustion portion via the reformed gas supply tube, the manifold, and the gas passage of the cell support to combust the fuel gas, so that the temperatures of the reformer and the fuel cell stack are raised from room temperature. Furthermore, in S11, when the temperature of reforming catalyst in the reformer rises and reaches an autothermal reformable temperature, the ATR process begins, and the reformer generates hydrogen-enriched fuel gas by the autothermal reforming reaction.

In the ATR process, there are an effect of increasing the catalytic reaction rate by introducing air other than raw fuel and water even when the temperature of the reforming catalyst is low, thereby performing the hydrogen-enriched supply in which methane and the compounds with 2 carbon atoms or more are reduced, and an effect of shortening the temperature increase time of the reforming catalyst (reformer) and the fuel cell stack. The present inventors have found that it is preferred to set $O_2/C$ to 0.1 or more to sufficiently exhibit these effects. Here, $O_2/C$ is a mixed molar ratio of oxygen ($O_2$) in the ATR air supplied to the reformer and hydrocarbon (C) in the raw fuel. Therefore, in the ATR process in S11, the flow rate of the ATR air is mainly controlled so that $O_2/C$ becomes 0.1 or more.

In S12, it is determined whether it is T ≥ (greater than or equal to) T1 by comparing the cell temperature T measured by the abovementioned temperature sensor with a predetermined minimum reduction start temperature T1. Here, the minimum reduction start temperature T1 is a minimum temperature at which the reduction of the cell support oxidized after the previous power generation stop can begin, and is stored in the internal memory of the control unit 9.

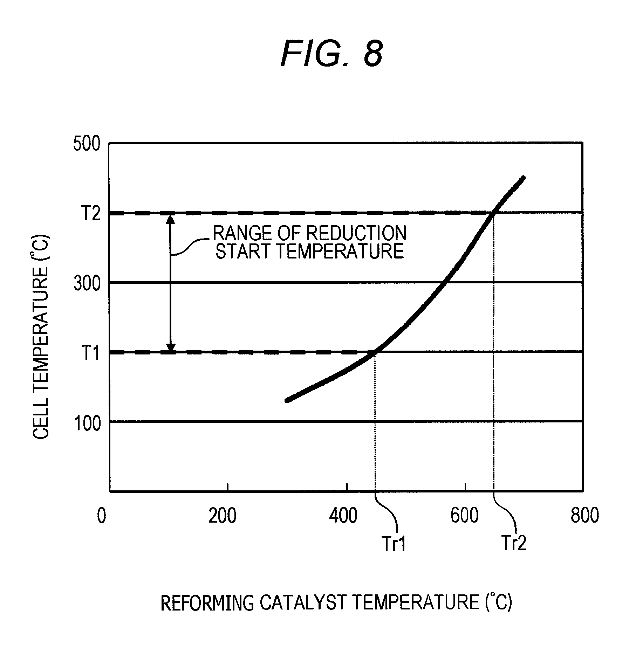

Here, the relationship between the cell temperature and the reforming catalyst temperature of the reformer will be described with reference to Fig. 8.

As illustrated in Fig. 8, the higher the reforming catalyst temperature is, the higher cell temperature is. In addition, the temperature range from the minimum reduction start temperature T1 (for example, approximately 200°C) in the cell temperature to a maximum reduction start temperature T2 (for example, approximately 400°C) to be described later corresponds to the reduction start temperature range of the cell support of the present invention. In other words, the temperature range from the minimum reduction start temperature T1 in the cell temperature to the maximum reduction start temperature T2 in the cell temperature corresponds to a temperature range at which the cell support oxidized after the power generation stop begins to be reduced by the fuel gas from the reformer during the current system start-up.

Furthermore, the minimum reduction start temperature T1 in the cell temperature corresponds to a first temperature Tr1 in the reforming catalyst (for example, approximately 450°C), and meanwhile, the maximum reduction start temperature T2 in the cell temperature corresponds to a second temperature Tr2 in the reforming catalyst (for example, approximately 650°C) (Tr1 < (less than) Tr2). Furthermore, the ATR process is performed in the temperature range from the first temperature Tr1 to the second temperature Tr2 in the reforming catalyst.

Returning to Fig. 7, in the case of T < (less than) T1 in S12, the process returns to S11 and S12, the measurement and the determination of the cell temperature T are continued, and in a case in which T ≥ (greater than or equal to) T1 is obtained, the process proceeds to S13.

In S13, the flow rate of the ATR air is mainly controlled so that the hydrogen concentration of the fuel gas supplied to the fuel cell stack from the reformer becomes 50% or less. Specifically, by mainly controlling the flow rate of the ATR air so that $O_2/C$ becomes 0.3 or more in the ATR process, the hydrogen concentration of the fuel gas from the reformer is set to 50% or less. Furthermore, when the raw fuel supplied to the reformer is a gas, $O_2/C$ corresponds to the ratio of an oxygen partial pressure in the ATR side air and a carbon partial pressure in the raw fuel.

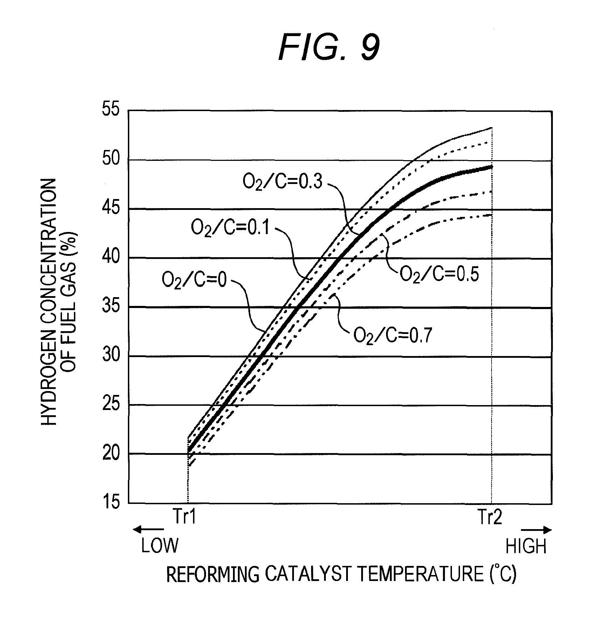

Fig. 9 illustrates a relationship among $O_2/C$, the reforming catalyst temperature of the reformer, and the hydrogen concentration of the fuel gas from the reformer. Here, Fig. 9 illustrates a case in which the mixed molar ratio (S/C) of water (S) supplied to the reformer and hydrocarbon (C) in the raw fuel is 2.7, however, the S/C conditions are generally 2.1 or more and 3 or less, and as long as the conditions are within this range, it is possible to use the case in Fig. 9.

As illustrated in Fig. 9, when $O_2/C$ is constant, the higher the reforming catalyst temperature is, the higher the hydrogen concentration of the fuel gas from the reformer is. Furthermore, when the reforming catalyst temperature is constant, the higher $O_2/C$ is, the lower the hydrogen concentration of the fuel gas from the reformer is.

Furthermore, Fig. 9 illustrates that when the reforming catalyst temperature is within the temperature range from the first temperature Tr1 to the second temperature Tr2, if $O_2/C$ is 0.3 or more, the hydrogen concentration of the fuel gas from the reformer is 50% or less.

Thus, by setting $O_2/C$ to 0.3 or more when the reforming catalyst temperature is within the temperature range from the first temperature Tr1 to the second temperature Tr2 (that is, when the cell temperature is within the reduction start temperature range (T1 to T2)), it is possible to set the hydrogen concentration of the fuel gas from the reformer to 50% or less. By suppressing the hydrogen concentration of the fuel gas from the reformer to 50% or less as described above, since the cell support oxidized after the power generation stop relatively slowly begins to be reduced at the time of the system start-up (in other words, since a rapid increase of the reduction reaction rate is suppressed), the contraction or the like of the cell is reduced to suppress the cell damage risk, and a drop of the cell voltage is suppressed.

Furthermore, when the reforming catalyst temperature is within the temperature range from the first temperature Tr1 to the second temperature Tr2 (that is, when the cell temperature is within the reduction start temperature range (T1 to T2)), if $O_2/C$ is set to a value greater than 0.7 (for example, 1.0 or more), the autothermal reforming reaction becomes unstable, an $O_2$ slip occurs in the reformer, and there is a possibility that the cell support is oxidized.

Therefore, in order to stably perform the autothermal reforming reaction in the reformer, when the reforming catalyst temperature is within the temperature range from the first temperature Tr1 to the second temperature Tr2 (that is, when the cell temperature is within the reduction start temperature range (T1 to T2)), it is preferred to set $O_2/C$ within the range of 0.3 to 0.7. Furthermore, when the reforming catalyst temperature is within the temperature range from the first temperature Tr1 to the second temperature Tr2 (that is, when the cell temperature is within the reduction start temperature range (T1 to T2)), in a case in which $O_2/C$ is within the range from 0.3 to 0.7, as illustrated in Fig. 9, the hydrogen concentration of the fuel gas from the reformer is within the range from 15% to 50%.

Referring back to Fig. 7, in S14, it is determined whether it is T > (greater than) T2 by comparing the measured cell temperature T with the predetermined maximum reduction start temperature T2. Here, the maximum reduction start temperature T2 is a maximum temperature at which the reduction of the cell support oxidized after the previous power generation stop can be started, and is stored in the internal memory of the control unit 9 (T1 < (less than) T2).

In the case of T ≤ (less than or equal to) T2 in S14, the process returns to S13 and S14, and the measurement and the determination of the cell temperature T are continued, while setting the hydrogen concentration of the fuel gas to 50% or less, and at the time when T > (greater than) T2 is obtained, the process proceeds to step S15.

In S15, by reducing $O_2/C$, the temperature increase of the reformer and the fuel cell stack is continued while gradually increasing the hydrogen concentration of the fuel gas from the reformer, and when the cell temperature reaches a temperature required for normal operation, the control is terminated, and the process proceeds to the normal operation control.

Furthermore, function of the hydrogen concentration control unit of the present invention is implemented by S11 to S15 executed by the control unit 9.

According to the present embodiment, when the temperature (cell temperature T) of the cell support 21 during the system start-up is within the reduction start temperature range (from the minimum reduction start temperature T1 to the maximum reduction start temperature T2), the hydrogen concentration of the fuel gas from the reformer 6 is set to 50% or less. Thus, the cell support 21 oxidized after the previous stop relatively slowly begins to be reduced at the time of the restart (in other words, a rapid increase of the reduction rate is suppressed), and thus, the contraction or the like of the cell is reduced. Therefore, since the cell damage risk is suppressed and the drop of the cell voltage is suppressed (in other words, since the voltage drop rate is reliably within the allowable range (specifically, 5% or less)), it is possible to secure good power generation performance during actual useful service period of the system, and thus, it is possible to improve the durability of the SOFC system.

Furthermore, according to the present embodiment, when the temperature (cell temperature T) of the cell support 21 during the system start-up is within the reduction start temperature range (from the minimum reduction start temperature T1 to the maximum reduction start temperature T2), by setting the mixed molar ratio ($O_2/C$) of oxygen ($O_2$) in the ATR air supplied to the reformer 6 and the hydrocarbon (C) in the raw fuel to 0.3 or more, the hydrogen concentration of the fuel gas from the reformer 6 is set to 50% or less. Thus, it is possible to reliably set the hydrogen concentration of the fuel gas to 50% or less by a relatively simple technique.

Furthermore, in the present embodiment, the method of directly measuring the temperature of the cell support (cell temperature) by the temperature sensor has been described, however, the method of measuring the temperature of the cell support is not limited thereto, and for example, it is possible to measure the temperature of the reforming catalyst via the temperature sensor, and to indirectly determine the temperature of the cell support corresponding to the measured temperature with reference to Fig. 8.

Next, a second embodiment of the present invention will be described.

The abovementioned first embodiment has suggested the start-up method of setting the hydrogen concentration of the fuel gas from the reformer to 50% or less by setting $O_2/C$ to 0.3 or more when temperature (cell temperature T) of the cell support is within the reduction start temperature range at every time of start-up of the system. Since the cell support always relatively slowly begins to be reduced at the time of restart by this start-up method, it is possible to reduce the contraction or the like of the cell. However, when setting $O_2/C$ to 0.3 or more at the time of the system start-up, since the relatively more ATR air from the outside is supplied to the reformer, the temperature increase of the reformer and the fuel cell stack slows down, and as a result, there is a possibility that the start-up time of the system increases.

Therefore, in the second embodiment, at the time of the system start-up after the system operation stops, by limiting the application of the start-up method suggested in the first embodiment only to at the time of system start-up after the system is shutdown in a state in which the oxidation of the cell support is particularly concerned, the prolonged start-up time of the system is suppressed.

There is a possibility that the situations which require the emergency shutdown for some reasons such as fuel shutoff, system power abnormality, and various pump abnormalities during the operation of the system.

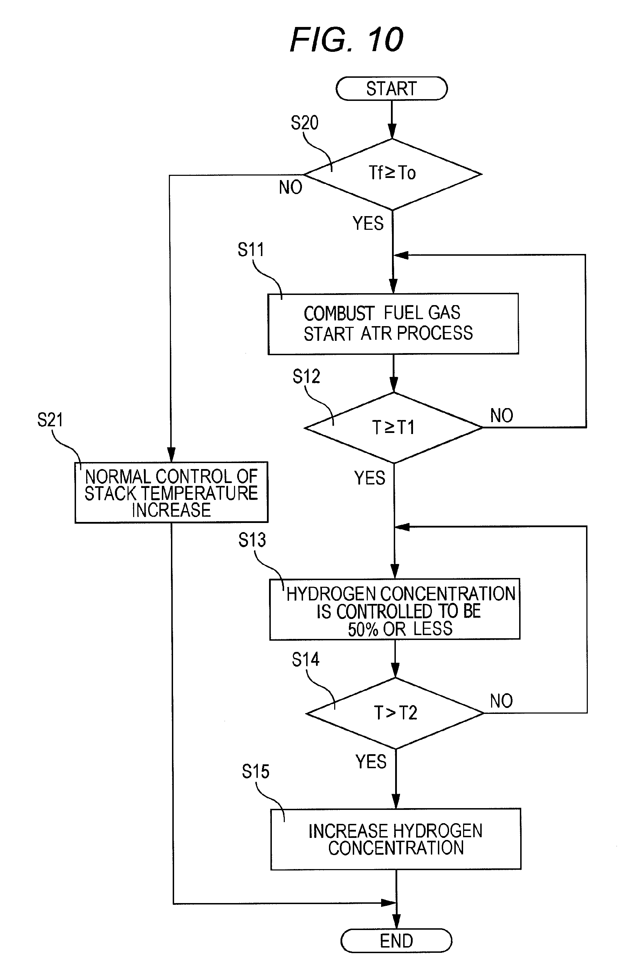

In order to cope with such situations, in the present embodiment, in the power generation stop control at the time of the system normal stop, the flowchart illustrated in Fig. 6 is used, and in the power generation stop control at the time of system emergency shutdown, process directly proceeding from S2 to S6 is used by skipping S3 to S5 of the flowchart illustrated in Fig 6 so that the system is completely stopped as soon as possible. Therefore, at the time of the system emergency shutdown, the supply of reformed gas can be stopped at a temperature at which the nickel metal in the cell support is oxidized (temperature equal to or greater than the abovementioned minimum oxidation temperature of the nickel metal), and back diffusion of air from the gas passage of the cell support can occur. Thus, there is a possibility that the Ni oxidation degree after stop of the cell support increases compared to that at the time of normal stop. Therefore, in the present embodiment, by using the flow illustrated in Fig. 10 as the flowchart of the stack temperature increase control during the system start-up, instead of the flowchart illustrated in Fig. 7, the method of increasing the stack temperature is changed depending on the previous stop state (in other words, depending on the system shutdown state before the system start-up).

Fig. 10 is a flowchart of the stack temperature increase control during start-up in the second embodiment of the present invention. Furthermore, the stack temperature increase control is executed by the control unit 9 as in the first embodiment.

Differences from the flowchart illustrated in Fig. 7 will be described.

At the time of start-up, in S20, it is determined whether the previous system stop state is an emergency shutdown state. Specifically, it is determined whether it is Tf ≥ (greater than or equal to) To, by comparing a temperature Tf measured when stopping the supply of the reformed gas after the previous power generation stop (cell upper end portion temperature, etc.) with a predetermined minimum oxidation temperature To of the nickel metal in the cell support. Here, the minimum oxidation temperature To corresponds to the minimum temperature at which the nickel metal in the cell support can be oxidized at the time of the reformed gas stop, which, for example, is preset at about 400°C, and is stored in the internal memory of the control unit 9. Furthermore, the cell temperature Tf is measured by the abovementioned temperature sensor at the time (S6 in Fig. 6) of stopping the supply of the reformed gas after the previous power generation stop, and is stored in the internal memory of the control unit 9.

In the case of Tf ≥ (greater than or equal to) To in S20, it is determined that the previous system stop state is the emergency shutdown state, and as in Fig. 7, in S11 to S14, when the temperature of the cell support is within the reduction start temperature range, by suppressing the hydrogen concentration of the fuel gas to 50% or less, the rapid rise of the reduction reaction rate is suppressed. Moreover, as in Fig. 7, the temperatures of the reformer and the fuel cell stack are continuously raised, while gradually raising the hydrogen concentration of the fuel gas in S15, and at the time when the cell temperature reaches a temperature that is required during normal operation, this control is terminated, and the process proceeds to the normal operation control.

Meanwhile, in the case of Tf < (less than) To in S20, it is determined that the previous system stop state is not the emergency shutdown state (that is, the normal stop state), and the process proceeds to S21.

In S21, the stack temperature increase normal control is performed. As an example of this control, first, the raw fuel, water, and ATR air as needed are supplied to the reformer, and the fuel gas from the reformer is supplied to the combustion portion via the reformed gas supply tube, the manifold, and the gas passage of the cell support to be combusted in the combustion portion, thereby raising the temperatures of the reformer and the fuel cell stack from room temperature. Next, when the reforming catalyst in the reformer reaches the autothermal reformable temperature, the ATR process begins, and the reformer generates the hydrogen-enriched fuel gas by the autothermal reforming reaction. In the ATR process, since the hydrogen concentration of the fuel gas is not often considered, there is a high possibility that the hydrogen concentration of the fuel gas exceeds 50% (for example, a few percentage points above 50%). Moreover, the temperatures of the reformer and the fuel cell stack are continuously raised, and at the time when the cell temperature reaches the temperature required for the normal operation, this control is terminated, and the process proceeds to the normal operation control.

In addition, by S11 to S15 and S20 executed by the control unit 9, the function of the hydrogen concentration control unit of the present invention is implemented.

According to the embodiment, in particular, in a case in which, during system start-up after the system operation stops, when the fuel gas supply to the fuel cell stack 10 from the reformer 6 is stopped during the system operation stop, the temperature (cell temperature Tf) of the cell support 21 is equal to or greater than the minimum oxidation temperature To of nickel metal in the cell support 21, and the temperature (cell temperature T) of the cell support 21 is within the reduction start temperature range (from minimum reduction start temperature T1 to maximum reduction start temperature T2) during the system start-up, the hydrogen concentration of the fuel gas from the reformer 6 is set to 50% or less. As a result, even in a case in which the stopped state before the restart is an emergency shutdown state and the like, and the Ni oxidation degree after stop of the cell support 21 is relatively high, at the time of restart, the reduction is gradually started in the cell support 21, and thus, the contraction or the like of the cell is reduced. Therefore, since the cell damage risk is suppressed and the drop of the cell voltage is suppressed (in other words, the voltage drop rate is reliably within the allowable range (specifically, 5% or less)), it is possible to secure good power generation performance during the actual useful service period of the system, and thus, it is possible to improve the durability of the SOFC system.

Furthermore, the present invention can be applied, regardless of the form of the power generation stop control at the time of the system stop. For example, the present invention has a configuration in which the hydrogen concentration of the fuel gas from the reformer is 50% or less when the temperature of the cell support is within the reduction start temperature range at the time of the system start-up, even if the system is stopped in any manner.

Moreover, each control described above is a control method which is not broken down as a control system even when a change in external temperature or a temporal change occurs and is based on a cell damage principle. In accordance with full-scale popularization of the SOFC system from now, this control method is considered to be a technique capable of applying to the system even if components are simplified or a control system is simplified.

Incidentally, the embodiments illustrated in the figures are merely examples of the present invention, and of course, the invention includes those directly specified by the described embodiments, as well as various improvements and modifications, which can be conceived by one skilled in the art within the scope of the appended claims.

REFERENCE SIGNS LIST

| | |
|---|---|
| 1 | Hot module |
| 2 | Module case |
| 3 | Supply tube of fuel, water and air for ATR |
| 4 | Supply tube of air for cathode |
| 5 | Exhaust port |
| 6 | Reformer |
| 6a | Reformed gas outlet |
| 7 | Reformed gas supply tube |
| 8 | Manifold |
| 9 | Control unit (hydrogen concentration control unit) |
| 10 (10-1, 10-2) | Fuel cell stack |
| 20 | Fuel cell |
| 21 | Cell support |
| 22 | Gas passage |
| 23 | Fuel electrode layer |
| 24 | Solid oxide electrolyte layer |
| 25 | Air electrode layer |
| 26 | Interconnector |
| 30 | Collector member |
| 40 | Conductive member |

**Claims**

1. A method for starting a solid oxide fuel cell system configured to include: a reformer that generates a hydrogen-enriched fuel gas by a reforming reaction; a fuel cell stack that allows the fuel gas from the reformer to react with air to generate power; and a module case that surrounds the reformer and the fuel cell stack, in the inside of which excessive fuel gas of the fuel cell stack is combusted to maintain the reformer and the fuel cell stack in a high temperature state, in which each cell forming the fuel cell stack is made of a porous material having a composition including at least a nickel metal, includes a cell support having a gas passage through which the fuel gas from the reformer flows from one end to the other end on the inside thereof, and is formed by stacking a fuel electrode layer, a solid oxide electrolytic layer, and an air electrode layer on the cell support, and the excessive fuel gas is combusted at the other end of the gas passage,
wherein when a temperature of the cell support is within a reduction start temperature range during system start-up, a hydrogen concentration of the fuel gas from the reformer is 50% or less.

2. The method for starting the solid oxide fuel cell system according to claim 1,
wherein the reformer is capable of generating the hydrogen-enriched fuel gas by autothermal reforming reaction, when the temperature of the cell support is within the reduction start temperature range during the system start-up, by setting a mixed molar ratio ($O_2$/C) of oxygen ($O_2$) in air supplied to the reformer and hydrocarbon (C) in the raw fuel to 0.3 or more, the hydrogen concentration of the fuel gas from the reformer is set to 50% or less.

3. The method for starting the solid oxide fuel cell system according to claim 1,
wherein during the system start-up after system operation stops, in a case in which the temperature of the cell support is greater than or equal to a minimum oxidation temperature of nickel metal in the cell support at the time when the fuel gas supply to the fuel cell stack from the reformer is stopped during the system operation stop and the temperature of the cell support is within the reduction start temperature range during the system start-up, the hydrogen concentration of the fuel gas from the reformer is set to 50% or less.

4. A solid oxide fuel cell system configured to include: a reformer that generates a hydrogen-enriched fuel gas by a reforming reaction; a fuel cell stack that allows to react the fuel gas from the reformer with air to generate power; and a module case that surrounds the reformer and the fuel cell stack, in the inside of which excessive fuel gas in the fuel cell stack is combusted to maintain the reformer and the fuel cell stack in a high temperature state, in which each cell forming the fuel cell stack is made of a porous material having a composition including at least a nickel metal, include a cell support having a gas passage through which the fuel gas from the reformer flows from one end to the other end on the inside thereof, and is formed by stacking a fuel electrode layer, a solid oxide electrolytic layer, and an air electrode layer on the cell support, and the excessive fuel gas is combusted at the other end of the gas passage,
the solid oxide fuel cell system comprising a hydrogen concentration control unit that controls the hydrogen concentration of the fuel gas from the reformer,
wherein when the temperature of the cell support is within a reduction start temperature range during system start-up, the hydrogen concentration control unit controls the hydrogen concentration of the fuel gas from the reformer to 50% or less.

5. The solid oxide fuel cell system according to claim 4,
wherein the reformer is capable of generating the hydrogen-enriched fuel gas by autothermal reforming reaction, wherein when the temperature of the cell support is within the reduction start temperature range during the system start-up, the hydrogen concentration control unit controls the hydrogen concentration of the fuel gas from the reformer to 50% or less by setting a mixed molar ratio ($O_2$/C) of oxygen ($O_2$) in air supplied to the reformer and hydrocarbon (C) in the raw fuel to 0.3 or more.

6. The solid oxide fuel cell system according to claim 4,
wherein during the system start-up after system operation stops, in a case in which the temperature of the cell support is greater than or equal to a minimum oxidation temperature of nickel metal in the cell support at the time when the fuel gas supply to the fuel cell stack from the reformer is stopped during the system operation stop and the temperature of the cell support is within the reduction start temperature range during the system start-up, the hydrogen concentration control unit controls the hydrogen concentration of the fuel gas from the reformer to 50% or less.

# FIG. 1

# FIG. 2

# FIG. 3

CORRELATION BETWEEN Ni OXIDATION
DEGREE AND CELL VOLTAGE DROP RATE

o OXIDATION DEGREE 0.8%
△ OXIDATION DEGREE 1.2%
□ OXIDATION DEGREE 2.8%
× OXIDATION DEGREE 3.3%
∗ OXIDATION DEGREE 10%

CELL VOLTAGE DROP RATE (%)

NUMBER OF START-UP
AND STOP (TIMES)

# FIG. 4

CORRELATION BETWEEN Ni OXIDATION
DEGREE AND VOLTAGE DROP RATE AFTER
PERFORMING START-UP AND STOP 240 TIMES

# FIG. 5

MAXIMUM STACK TEMPERATURE AT TIME
OF STOPPING REFORMED GAS
(TEMPERATURE OF UPPER END OF CELL) (°C)

# FIG. 6

```
        ┌─────────────────────┐
        │  POWER GENERATION   │
        │   STOP CONTROL      │
        └─────────────────────┘
                  │
        ┌─────────┘
        │         ▼
   S1   ╱─────────────────────────╲
   ┌────   IS THERE POWER           ╲
   NO   ╲ GENERATION STOP REQUEST?  ╱
        ╲─────────────────────────╱
                  │ YES
                  ▼
   S2   ┌─────────────────────┐
        │ STOP CURRENT SWEEP  │
        │ REDUCE SUPPLY AMOUNT│
        │   OF FUEL/WATER     │
        └─────────────────────┘
                  │
                  ▼
   S3   ┌─────────────────────┐
        │ READ MINIMUM OXIDATION│
        │   TEMPERATURE Ts    │
        └─────────────────────┘
                  │
        ┌─────────┘
        │         ▼
   S4   ┌─────────────────────┐
        │MEASURE CELL TEMPERATURE T│
        └─────────────────────┘
                  │
                  ▼
   S5   ╱─────────────────────╲
   ┌────        T ≤ Ts          ╲
   NO   ╲─────────────────────╱
                  │ YES
                  ▼
   S6   ┌─────────────────────┐
        │STOP REFORMED GAS SUPPLY│
        │(STOP FUEL/WATER SUPPLY)│
        └─────────────────────┘
                  │
                  ▼
        ┌─────────────┐
        │     END     │
        └─────────────┘
```

20

# FIG. 7

```
                    START

            ┌───────────────────────┐
  S11       │   COMBUST  FUEL GAS    │
            │   START ATR PROCESS    │
            └───────────────────────┘

  S12              ╱╲
                 ╱    ╲         NO
                ⟨ T ≥ T1 ⟩ ──────────┐
                 ╲    ╱               │
                   ╲╱                 │
                  YES                 │
                                      │
            ┌───────────────────────┐
  S13       │ HYDROGEN CONCENTRATION │
            │    IS CONTROLLED TO BE  │
            │      50% OR LESS        │
            └───────────────────────┘

  S14              ╱╲
                 ╱    ╲         NO
                ⟨ T > T2 ⟩ ──────────┐
                 ╲    ╱               │
                   ╲╱                 │
                  YES                 │

            ┌───────────────────────┐
  S15       │   INCREASE HYDROGEN    │
            │     CONCENTRATION      │
            └───────────────────────┘

                    END
```

# FIG. 8

# FIG. 9

# FIG. 10

START

S20 — Tf ≥ To
NO / YES

S11 — COMBUST FUEL GAS
START ATR PROCESS

S12 — T ≥ T1
NO / YES

S21 — NORMAL CONTROL OF
STACK TEMPERATURE
INCREASE

S13 — HYDROGEN CONCENTRATION
IS CONTROLLED TO BE
50% OR LESS

S14 — T > T2
NO / YES

S15 — INCREASE HYDROGEN
CONCENTRATION

END

# FIG. 11

| | INTERNATIONAL SEARCH REPORT | International application No. |
|---|---|---|
| | | PCT/JP2012/078726 |

A. CLASSIFICATION OF SUBJECT MATTER
*H01M8/04*(2006.01)i, *H01M8/06*(2006.01)i, *H01M8/12*(2006.01)i

According to International Patent Classification (IPC) or to both national classification and IPC

B. FIELDS SEARCHED

Minimum documentation searched (classification system followed by classification symbols)
H01M8/04, H01M8/06, H01M8/12

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2011-96432 A (Kyocera Corp.), 12 May 2011 (12.05.2011), paragraphs [0020] to [0028], [0072] to [0079]; fig. 1, 3, 4 (Family: none) | 1,2,4,5 |
| Y | JP 2011-181490 A (Topsoe Fuel Cell A/S), 15 September 2011 (15.09.2011), paragraphs [0007], [0008], [0099] to [0105]; fig. 1, 3, 4 & US 2011/0146154 A1 & EP 2336083 A1 & CN 102104166 A & KR 10-2011-0069727 A & AU 2010253491 A & RU 2010151606 A & CA 2725699 A1 | 1,2,4,5 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 January, 2013 (28.01.13) | 05 February, 2013 (05.02.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/078726 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2005-158529 A  (Kyocera Corp.),<br>16 June 2005 (16.06.2005),<br>paragraph [0057]<br>(Family: none) | 1,2,4,5 |
| Y | JP 2004-217505 A  (Osaka Gas Co., Ltd.),<br>05 August 2004 (05.08.2004),<br>paragraph [0082]; fig. 6<br>(Family: none) | 2,5 |
| A | JP 2004-335163 A  (Mitsubishi Materials Corp.,<br>The Kansai Electric Power Co., Inc.),<br>25 November 2004 (25.11.2004),<br>paragraphs [0024], [0031] to [0039]; fig. 1<br>(Family: none) | 1-6 |
| A | JP 11-162492 A  (Tokyo Gas Co., Ltd.),<br>18 June 1999 (18.06.1999),<br>paragraphs [0023] to [0031]; fig. 1<br>(Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4565980 B

- JP 2004319420 A